# FASCICULE DE BREVET EUROPEEN

(11) **EP 3 751 102 B1**
(45) Date de publication et mention de la délivrance du brevet: **27.07.2022**
(21) Numéro de dépôt: 20172480.4
(22) Date de dépôt: 30.04.2020
(51) Int. Cl.: F01D 5/30

(54) **ROTOR POUR COMPRESSEUR DE TURBOMACHINE ET PROCÉDÉ DE MONTAGE ASSOCIÉ**
ROTOR FÜR DEN KOMPRESSOR EINER ROTATIONSMASCHINE UND ZUGEHÖRIGES FERTIGUNGSVERFAHREN
ROTOR FOR THE COMPRESSOR OF A TURBOMACHINE AND CORRESPONDING ASSEMBLY METHOD

(30) Priorité: 11.06.2019 BE 201905371
(43) Date de publication de la demande: 16.12.2020
(73) Titulaire: Safran Aero Boosters SA, 4041 Herstal (BE)
(72) Inventeur: PEREZ, Rafael, 4041 Herstal (BE)
(74) Mandataire: Lecomte & Partners

(56) Documents cités:
- EP-A1- 2 400 160
- EP-A1- 3 085 889
- FR-A1- 2 143 561
- US-A1- 2011 014 041

## Description

### Domaine technique

L'invention concerne la conception d'une turbomachine, notamment un turboréacteur d'avion ou un turbopropulseur d'aéronef. L'invention a en particulier trait à un rotor de compresseur composé de plusieurs parties, dont un tambour en matériau composite.

### Technique antérieure

Afin de maîtriser la consommation en carburant d'un aéronef, l'allégement des pièces mécaniques est toujours recherché. À cet effet, il est connu de fabriquer un tambour de rotor de turbomachine, réalisé au moins partiellement en matériau composite avec des fibres de carbone. Des aubes, généralement métalliques, sont fixées au tambour.

Le document de brevet FR 2 143 561 A1 divulgue une turbomachine avec un tel rotor de conception hybride composite/métal. Un tambour en matériau composite est entouré d'un tambour métallique sur lequel sont fixées les aubes au moyen de queues d'arondes axiales. Les aubes sont fixées au rotor par des barrettes métalliques qui présentent des évidements, de manière à diminuer le poids de la structure. Cette conception est complexe et rend le montage ou démontage des aubes fastidieux. Il y a également une marge d'amélioration possible quant au poids du rotor.

Le document de brevet publié EP 2 400 160 A1 divulgue un rotor composite pour une turbomachine. Des zones de support surélevées pour fixer une aube sont formées par la paroi du tambour. Les aubes sont alors fixées au tambour par des tiges filetées radiales. Cette structure rend, de par sa forme particulière, la fabrication du rotor complexe. Le montage individuel de chacune des aubes par une tige filetée respective est également fastidieux.

### Résumé de l'invention

### Problème technique

L'invention a pour objectif de pallier les inconvénients relevés dans les turbomachines de l'état de la technique et en particulier de proposer un rotor plus léger et dont la fabrication et/ou l'assemblage sont plus économiques.

### Solution technique

L'invention a pour objet un rotor pour compresseur de turbomachine, tel un turboréacteur d'aéronef, comprenant : un tambour fait de matériau composite ; et une pluralité de rangées annulaires d'aubes rotoriques ; remarquable en ce qu'il comprend, pour chaque rangée d'aubes, une coquille annulaire de fixation des aubes au tambour, la coquille étant fixée au tambour par des éléments vissés.

Le terme « coquille » est employé ici pour désigner un élément qui entoure au moins partiellement le tambour. La coquille peut être le fait d'un assemblage de plusieurs pièces circonférentiellement adjacentes ou axialement adjacentes.

Selon des modes avantageux de l'invention, le rotor peut comprendre une ou plusieurs des caractéristiques suivantes, prises isolément ou selon toutes les combinaisons techniquement possibles :
- La coquille est formée de plusieurs segments angulaires, tels que deux demi-coquilles. Alternativement, trois tiers de coquille (120°) ou plusieurs segments angulaires hétérogènes peuvent être prévus. Ceci permet, par exemple, de prévoir une demi-coquille s'étendant sur 180° avec des aubes soudées, et une demi-coquille avec des aubes venues de matière. Ceci permet d'optimiser l'outil de production et les temps de montage ;
- La coquille comprend une pluralité d'orifices angulairement répartis autour d'un axe du rotor, le tambour disposant d'orifices axialement et circonférentiellement alignés avec les orifices de la coquille, et les éléments vissés étant des vis qui pénètrent dans les orifices ;
- Des écrous respectifs viennent maintenir les vis, les écrous étant agencés radialement à l'intérieur du tambour et les vis ayant des têtes radialement à l'extérieur des orifices respectifs de la coquille ;
- La coquille comprend une portion centrale recevant les aubes, une gouttière amont et une gouttière aval. Les gouttières permettent d'améliorer l'étanchéité entre le rotor et le stator. Les orifices de la coquille sont agencés dans la gouttière amont, la gouttière aval étant en porte-à-faux ;
- La coquille comprend des pattes de fixation et les orifices de la coquille sont agencés dans les pattes. Les pattes peuvent avoir la même section que les gouttières décrites ci-dessus mais elles ne s'étendent pas circonférentiellement tout autour de la coquille. Ainsi, pour une rangée d'aubes qui comprend entre 50 et 100 aubes, il peut y avoir entre 50 et 100 pattes, chacune accueillant un élément vissé ;
- La coquille comprend une cavité annulaire ouverte radialement vers l'intérieur, et des bords renfermant partiellement la cavité, les éléments vissés étant constitués de plaquettes de fixation agencées dans la cavité annulaire et en appui sur les bords, et de vis retenant les plaquettes sur le tambour. Les plaquettes sont munies chacune d'un trou taraudé recevant les vis. Les plaquettes peuvent notamment avoir une section rectangulaire ou carrée pour être autobloquante lors du serrage de la vis ;
- Le tambour comprend une portion cylindrique ou conique sur laquelle est supportée la coquille. Comme le tambour n'est pas directement au contact de l'air, celui-ci n'est pas contraint à une forme particulière et peut comprendre des portions de forme particulièrement adaptées à la fixation des coquilles.
- Au moins une des aubes est soudée ou vissée à la coquille ;
- Alternativement, ou en complément, au moins une des aubes est venue de matière avec la coquille. Par « venue de matière », on entend monobloc et usinée dans un même brut forgé ou moulé ;
- La coquille est en métal, ou, alternativement, la coquille est en matériau composite. Le métal présente l'avantage d'un bon contrôle de la surface de guidage du flux d'air. Les coquilles en matériau composite sont plus légères.
- Le tambour comprend des douilles métalliques prévues sous forme d'inserts de moulage et les éléments vissés sont reçus dans ces douilles. Ceci permet de visser les éléments vissés en réduisant les risques d'endommagement du matériau composite du tambour.

L'invention a également trait à un procédé de montage d'un rotor selon l'invention, le procédé comprenant une étape de mise en position par déplacement axial de la coquille sur le tambour et une étape de mise en place d'éléments de fixation, notamment le vissage des éléments vissés pour solidariser la coquille au tambour.

Lorsque des aubes sont soudées à la coquille, ce soudage peut être effectué avant ou après que la coquille ne soit montée sur le tambour.

Selon un mode avantageux, les vis sont serrées à l'aveugle depuis l'intérieur du tambour. Ainsi, la forme rectangulaire ou carrée des plaquettes vient au contact des bords de la coquille pour permettre le serrage d'une vis dans un trou taraudé de la plaquette. Dans le mode de réalisation sans plaquettes, le trou taraudé de la coquille permet le même fonctionnement.

De manière générale, les modes avantageux de chaque objet de l'invention sont également applicables aux autres objets de l'invention. Chaque objet de l'invention est combinable aux autres objets, et les objets de l'invention sont également combinables aux modes de réalisation de la description, qui en plus sont combinables entre eux, selon toutes les combinaisons techniques possibles, à moins que le contraire ne soit explicitement mentionné.

### Avantages apportés

La conception hybride du rotor selon l'invention, c'est-à-dire un rotor intégrant un tambour en matériau composite et des aubes métalliques, permet un gain substantiel en poids, par rapport à un rotor comprenant un tambour métallique. Par rapport à un rotor monobloc, fabriqué d'un seul tenant, le temps de fabrication du rotor selon l'invention est drastiquement réduit, car plusieurs éléments peuvent être fabriqués en parallèle avant d'être montés ensemble. La fabrication d'une coquille annulaire associée à une seule rangée d'aubes permet également de faciliter le changement d'aubes après la fabrication, car, en cas de défaillance d'une aube, seule une coquille est à déposer. De plus, cela permet de garder une certaine rapidité dans le montage de la turbomachine, puisque la fixation de chaque aube n'est pas réalisée individuellement sur le rotor. Le poids total de la turbomachine est également diminué par la conception des coquilles et par la préférence quant à l'utilisation de matériaux composites plutôt que des matériaux métalliques pour la fabrication des coquilles. La présence de gouttières sur les coquilles permet de faciliter la réorientation de l'air et d'améliorer l'étanchéité du rotor. De manière générale, la fabrication ou l'assemblage d'un rotor selon l'invention est plus économique à la fabrication et à l'usage.

### Brève description des dessins

La figure 1 est une vue en coupe d'une turbomachine axiale ;
La figure 2 est une vue en coupe schématique d'une partie d'une turbomachine axiale retrouvée dans l'art antérieur ;
La figure 3 représente une vue en coupe du rotor selon un premier mode de réalisation de l'invention ;
La figure 4 représente une vue en coupe du rotor selon un deuxième mode de réalisation de l'invention ;
La figure 5 représente une vue en coupe du rotor selon un troisième mode de réalisation de l'invention ;
Les figures 6 et 7 illustrent des segments de coquille.

### Description des modes de réalisation

Dans la description qui va suivre, les termes « interne » (ou « intérieur ») et « externe » (ou « extérieur ») renvoient à un positionnement par rapport à l'axe de rotation d'une turbomachine axiale et en particulier l'axe du rotor de compresseur. La direction axiale correspond à la direction le long de l'axe de rotation de la turbomachine. La direction radiale est perpendiculaire à l'axe de rotation. L'amont et l'aval sont en référence au sens d'écoulement principal du flux dans la turbomachine. Le terme « solidaire » est compris comme solidaire en rotation, et notamment rigidement lié.

Les figures représentent les éléments de manière schématique, notamment sans tous les éléments d'assemblage ou d'étanchéité.

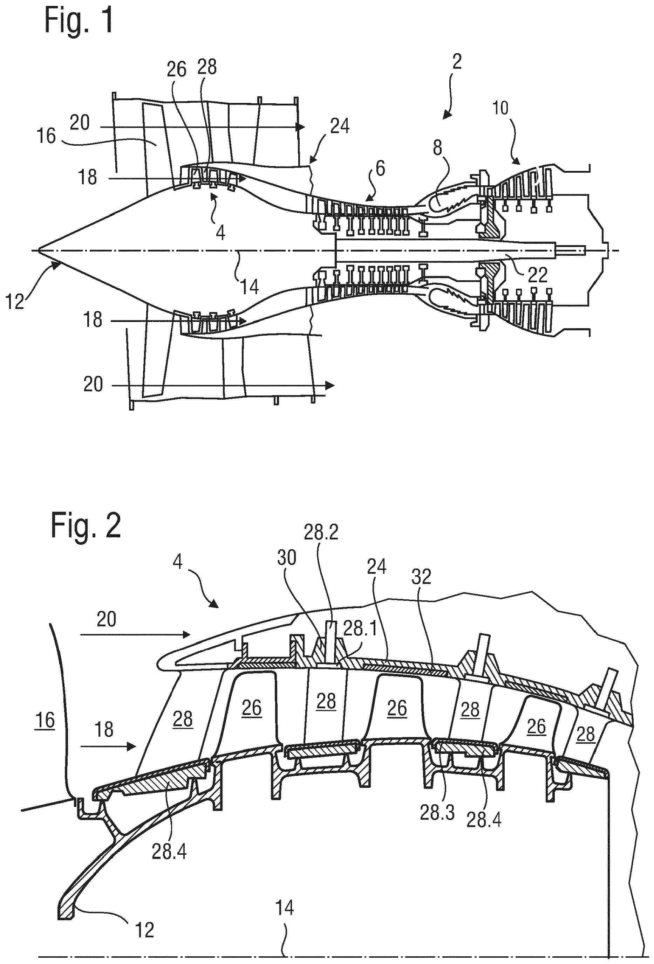

La figure 1 représente de manière simplifiée une turbomachine axiale 2, ou turboréacteur 2. Le turboréacteur 2 comprend un premier compresseur, basse-pression 4, un deuxième compresseur, haute-pression 6, une chambre de combustion 8 et une ou plusieurs turbines 10. En fonctionnement, la puissance mécanique de la turbine 10, transmise à un rotor 12, met en mouvement les deux compresseurs (4, 6). La rotation du rotor 12 autour de son axe de rotation 14 permet de générer un débit d'air et de comprimer progressivement ce dernier jusqu'à l'entrée de la chambre de combustion 8.

La turbomachine 2 comprend, en outre, une soufflante 16 ou fan 16, couplée au rotor 12. La soufflante 16 génère un flux d'air qui se divise en un flux primaire 18 et en un flux secondaire 20, le flux secondaire 20 traversant un conduit annulaire (partiellement représenté) le long de la turbomachine 2 pour ensuite rejoindre le flux primaire 18 en sortie de turbine 10.

Enfin, le rotor 12 de la turbomachine 2 comprend un arbre de transmission 22 monté sur un carter 24 au moyen de deux paliers. Le rotor 12 peut comprendre plusieurs rangées d'aubes rotoriques 26, associées à des rangées d'aubes statoriques 28, montées au carter 24 de la turbomachine 2.

La figure 2 est une vue en coupe du compresseur d'une turbomachine axiale que l'on peut trouver dans l'art antérieur. Le compresseur peut être un compresseur basse-pression 4. On peut y observer une partie du fan 16 ainsi qu'un bec de séparation des flux primaire 18 et secondaire 20.

Le compresseur basse-pression 4 comprend au moins un redresseur qui contient une rangée annulaire d'aubes statoriques 28. Chaque redresseur est associé au fan 16 ou à une rangée d'aubes rotoriques 26 pour en redresser le flux d'air.

Les aubes statoriques 28 s'étendent essentiellement radialement depuis une virole interne 28.3 jusqu'au carter 24. Les aubes statoriques 28 comprennent, chacune, une plateforme de fixation 28.1, et éventuellement des axes de fixation 28.2 autour desquelles les aubes statoriques 28 peuvent éventuellement pivoter. La virole interne 28.3 peut comprendre des couches annulaires de matériau abradable 28.4 pour assurer l'étanchéité de la veine d'air en coopération avec le rotor 12.

Le compresseur basse-pression 4 comprend le carter 24, qui peut présenter une forme généralement circulaire ou tubulaire. Il peut être un carter externe 24 de compresseur et peut être en matériau composite. Le carter 24 assure une fonction de lien mécanique entre le bec de séparation et le carter intermédiaire.

Le carter 24 assure également une fonction de centrage du bec de séparation par rapport au carter intermédiaire, par exemple à l'aide de brides annulaires 30.

La carter 24 peut comprendre une paroi 32 généralement circulaire ou en arc de cercle, dont les bords axiaux peuvent être délimités par les brides 30. La paroi 32 peut présenter un profil de révolution autour de l'axe de rotation 14, et peut être en matériau composite, avec une matrice et un renfort. La paroi 32 peut présenter une forme d'ogive, avec une variation de rayon le long de l'axe 14. Grâce aux matériaux composites, le carter 24 peut mesurer entre 3 et 5 mm d'épaisseur pour un diamètre supérieur à 1 mètre.

En aval du compresseur basse-pression 4 se trouve un compresseur haute-pression. Le fonctionnement du compresseur haute-pression est similaire au compresseur basse-pression 4.

Sur cet exemple de rotor connu, le rotor 12 est formé de manière unitaire, usiné dans un seul brut, pour à la fois réaliser les aubes rotoriques 26 et toutes les autres surfaces fonctionnelles du rotor 12. Ce rotor 12 est donc particulièrement lourd et cher à fabriquer. Si une aube 26 est défectueuse en fonctionnement ou si une aube 26 ne respecte pas les tolérances de fabrication, alors tout le rotor 12 est à mettre au rebut.

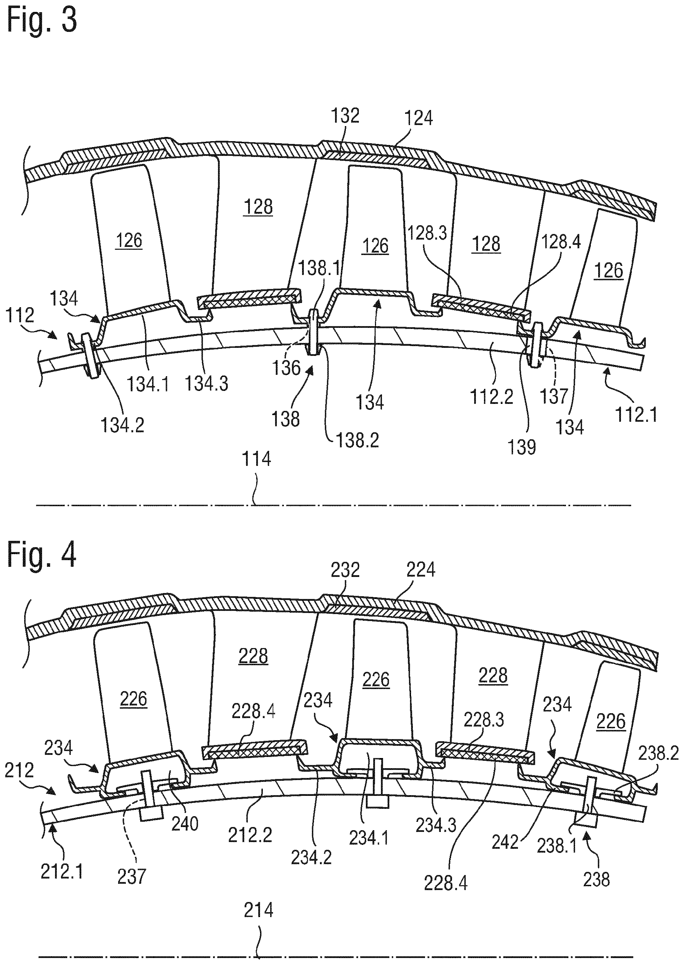

La figure 3 montre un compresseur selon un premier mode de réalisation de l'invention. La figure 3 reprend la numérotation des figures précédentes pour les éléments identiques ou similaires, la numération étant toutefois incrémentée de 100.

Ainsi, le rotor 112 comprend un tambour 112.1, de forme sensiblement axisymétrique, et réalisé dans un matériau composite. Sur ce tambour 112.1 est fixée une pluralité de rangées annulaires d'aubes rotoriques 126 dont trois rangées sont illustrées sur la figure 3. Chaque rangée annulaire d'aubes rotoriques 126 est montée sur, ou venue de matière avec, une coquille annulaire 134 de fixation des aubes 126 au tambour 112.1, et, plus préférentiellement, à une portion cylindrique 112.2 ou conique dudit tambour 112.1. Le tambour 112.1 est en effet représenté ici partiellement et il peut - à l'aune du tambour 12 de la figure 2 - présenter des portions non cylindriques et non coniques en amont ou en aval de la portion représentée sur la figure 3.

La fixation de la coquille annulaire 134 au tambour 112.1 est réalisée par des éléments vissés 138. Tout type de visserie - à savoir, les têtes et les types de filets - peut être utilisé. Les matériaux des visseries sont dictés par les normes en vigueur dans l'aéronautique. Les éléments vissés 138 sont préférentiellement des simples vis 138.1 avec la tête du côté intérieur du rotor 112.

Les vis 138 peuvent être auto-freinées et/ou le sens du filet peut être choisi pour que la rotation du rotor 112 ait tendance à maintenir la vis 138.1 serrée plutôt que de la desserrer. La vis 138.1 peut être introduite directement au contact du tambour 112.1 et de la coquille 134. Alternativement, une douille 139 peut être prévue dans le tambour 112.1 pour recevoir la vis 138.1. La douille 139 peut être un insert métallique de moulage du tambour 112.1. La tête de la vis 138.1 peut être, une fois la vis 138.1 serrée, en appui sur la douille 139.

Chaque coquille annulaire 134 comprend une pluralité d'orifices 136, préférentiellement taraudés, et angulairement répartis autour de l'axe 114 du rotor 112. Le tambour 112.1 du rotor 112 dispose d'orifices 137 axialement et circonférentiellement alignés avec les orifices 136 de la coquille annulaire 134. Les vis 138.1 pénètrent dans les orifices (136, 137).

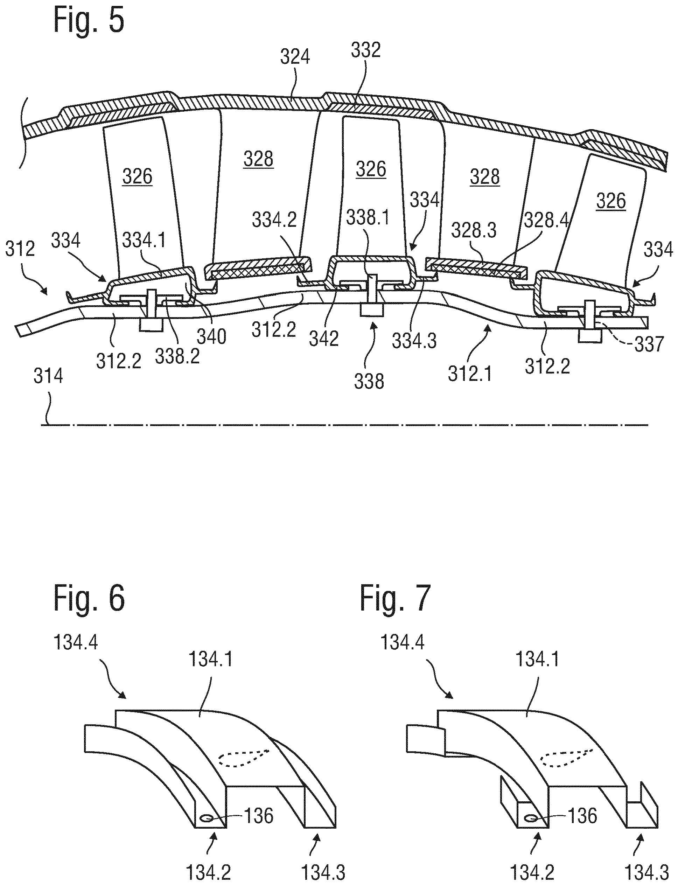

Avantageusement, chaque coquille annulaire 134 comprend une portion centrale 134.1 recevant les aubes rotoriques 126, une gouttière amont 134.2, et une gouttière aval 134.3, positionnée en porte-à-faux et s'étendant respectivement vers l'amont et vers l'aval depuis la portion centrale 134.1. Avantageusement, au moins une des aubes 126 est monobloc, soudée ou vissée à la coquille 134. Les coquilles 134 sont soit en métal soit en matériau composite. Avantageusement, les coquilles annulaires 134 sont formées de plusieurs segments angulaires (voir figures 6 ou 7), tels que deux demi-coquilles, de manière à faciliter leur mise en place sur le rotor 112. Toute combinaison de coquilles 134 partielles est possible, chacune des coquilles 134 supportant au moins deux aubes 126 circonférentiellement adjacentes.

Ainsi, la coquille 134 ou chaque coquille partielle peut former une surface de liaison entre intrados et extrados d'une aube rotorique 126 directement adjacente circonférentiellement.

Alternativement aux gouttières (134.2, 134.3) qui s'étendent circonférentiellement tout au long de la coquille 134, les coquilles 134 peuvent comprendre des pattes de fixation 134.2, en nombre suffisant pour assurer la tenue mécanique de l'ensemble Les pattes 134.2 comprennent les orifices 136 pour la fixation des coquilles annulaires 134 au tambour 112.1.

Les éléments vissés 138 peuvent alternativement être vissés depuis l'extérieur, la tête de vis 138.1 étant radialement à l'extérieur de la coquille 134 et un écrou 138.2 étant prévu à l'intérieur du tambour 112.1.

La figure 4 montre une vue en coupe d'un compresseur selon un deuxième mode de réalisation de l'invention. La figure 4 reprend la numérotation de la figure 3 précédente pour les éléments identiques ou similaires, la numération étant toutefois incrémentée de 100. Il est par ailleurs fait référence à la description de ces éléments en relation avec le premier mode de réalisation de l'invention décrit à la figure 3. Seuls les éléments distinctifs de ce mode de réalisation sont discutés ci-dessous.

Dans ce mode de réalisation, les coquilles 234 ont une section généralement en forme de lettre grecque π. Chaque coquille 234 comprend une cavité annulaire 240 ouverte radialement vers l'intérieur, et des bords 242 renfermant partiellement ladite cavité 240. Ces bords 242 sont en appui sur le tambour 212.1 et s'étendent axialement sur environ 15% à 30% de la largeur axiale de la cavité. Des pattes 234.2 ou des gouttières 234.2 viennent en saillie de la coquille 234 pour venir au contact d'une couche de matériau abradable 228.4.

Les éléments vissés 238 comprennent une vis 238.1 avec une tête agencée à l'intérieur du tambour 212.1 et des plaquettes de fixation 238.2. Les plaquettes de fixation 238.2 sont en appui sur les bords 242 de la cavité annulaire 240, les vis 238.1 servant à retenir les coquilles 234 sur le tambour 212.1 au moyen des plaquettes 238.2. Les plaquettes 238.2 sont munies d'un trou taraudé recevant les vis 238.1.

Ainsi, dans ce mode de réalisation, la fixation par éléments vissés 238 se fait axialement au centre de la coquille 234.

La figure 5 montre une vue en coupe d'un compresseur selon un troisième mode de réalisation de l'invention. La figure 5 reprend la numérotation des figures 3 et 4 pour les éléments identiques ou similaires, la numération étant toutefois incrémentée de 100 ou de 200. Il est par ailleurs fait référence à la description de ces éléments en relation avec les premier et deuxième modes de réalisation de l'invention.

Selon ce troisième mode de réalisation, le tambour 312.1 présente des portions cylindriques sous forme de paliers 312.2, chaque palier 312.2 étant apte à recevoir une coquille 334, la coquille 334 accueillant une rangée d'aubes rotoriques 326. Chaque palier 312.2 a un niveau différent des autres paliers 312.2. Ces surfaces cylindriques 312.2 permettent une conception et une fabrication plus simples des coquilles 334 et une meilleure maîtrise des géométries des surfaces du tambour 312.1 et de la coquille 334 qui sont amenées à être au contact l'une de l'autre.

Il va sans dire que les figures 3 à 5 n"illustrent que des exemples de modes de réalisation de l'invention sans que celle-ci n'y soit limitée. En particulier, les dimensions ne sont pas à l'échelle. Aussi, les différents enseignements des différents modes de réalisation peuvent être combinés : par exemple, un même rotor peut avoir une rangée d'aubes réalisée selon le premier mode de réalisation (fig. 3), suivie d'une rangée réalisée selon un autre mode (fig. 4 ou 5). Enfin, sur une même rangée annulaire d'aubes rotoriques, plusieurs segments annulaires de coquilles partielles, selon plusieurs des modes de réalisation illustrés, peuvent cohabiter.

Les figures 6 et 7 décrivent de manière très schématique un segment angulaire 134.4 qui s'étend circonférentiellement sur un angle défini par exemple, 20, 30 45, 50, 90 ou 180°. La coquille 134 peut être formée par une combinaison quelconque de segments angulaires 134.4 totalisant ensemble 360°. Un profil en pointillé montre un exemple d'emplacement pour une aube 126.

La figure 6 montre des gouttières 134.2 amont et aval qui s'étendent circonférentiellement sur l'intégralité du segment angulaire. La figure 7 montre des pattes 134.2 qui se distinguent des gouttières en ce qu'elles ne s'étendent pas sur la totalité du segment angulaire. Les pattes et les gouttières 134.2 sont percées d'un orifice 136 pour la fixation des segments 134.4 de coquille.

Circonférentiellement entre deux pattes adjacentes peut être prévue une léchette rapportée sur le tambour pour coopérer avec la couche de matériau abradable (128.4 voir fig. 3) de la virole statorique et assurer ainsi l'étanchéité du flux d'air aux endroits où il n'y a pas de pattes.

L'invention se rapporte également à un procédé, non représenté, de montage d'un rotor (112 ; 212 ; 312) selon l'invention. Le procédé comprend une première étape de mise en position par déplacement axial des coquilles (134 ; 234 ; 334) sur le tambour (112.1 ; 212.1 ; 312.1) et une étape de vissage des éléments vissés (138 ; 238 ; 338). Lorsque des aubes (126 ; 226 ; 326) sont soudées à la coquille (134 ; 234 ; 334), ce soudage peut être effectué avant ou après que la coquille (134 ; 234 ; 334) ne soit montée sur le tambour (112.1 ; 212.1 ; 312.1). Grâce aux plaquettes (238.2 ; 338.2) ou aux trous taraudés (136) de la coquille (134 ; 234 ; 334), les vis (138 ; 238 ; 338) peuvent être serrées à l'aveugle depuis l'intérieur du tambour (112.1 ; 212.1 ; 312.1).

Si l'invention se focalise sur des éléments vissés comme éléments de fixation, l'homme du métier reconnaîtra que des éléments de fixation de manière plus générale peuvent également être prévus, tels que des rivets, clips de montage rapide, etc.

## Revendications

1. Rotor (112 ; 212 ; 312) pour compresseur (4 ; 6) de turbomachine (2), tel un turboréacteur (2) d'aéronef, comprenant :
- un tambour (112.1 ; 212.1 ; 312.1), fait de matériau composite ; et
- une pluralité de rangées annulaires d'aubes rotoriques (126 ; 226 ; 326) ; **caractérisé en ce qu'**il comprend, pour chaque rangée d'aubes (126 ; 226 ; 326), une coquille annulaire (134 ; 234 ; 334) de fixation des aubes (126 ; 226 ; 326) au tambour (112.1 ; 212.1 ; 312.1), la coquille (134 ; 234 ; 334) étant fixée au tambour (112.1 ; 212.1 ; 312.1 ) par des éléments vissés (138 ; 238 ; 338).

2. Rotor (112 ; 212 ; 312) selon la revendication 1, **caractérisé en ce que** la coquille (134; 234; 334) est formée de plusieurs segments angulaires (134.4), tels que deux demi-coquilles.

3. Rotor (112) selon la revendication 1 ou 2, **caractérisé en ce que** la coquille (134) comprend une pluralité d'orifices (136) angulairement répartis autour d'un axe (114) du rotor (112), **en ce que** le tambour (112.1) dispose d'orifices (137) axialement et circonférentiellement alignés avec les orifices (136) de la coquille (134), et **en ce que** les éléments vissés (138) sont des vis (138.1) qui pénètrent dans les orifices (136, 137).

4. Rotor (112) selon la revendication 3, **caractérisé en ce que** des écrous (138.2) respectifs viennent maintenir les vis (138.1), les écrous (138.2) étant agencés radialement à l'intérieur du tambour (112.1) et les vis (138.1) ayant des têtes radialement à l'extérieur des orifices (136) respectifs de la coquille (134).

5. Rotor (112) selon l'une des revendications 1 à 4, **caractérisé en ce que** la coquille (134) comprend une portion centrale (134.1) recevant les aubes (126), une gouttière amont (134.2) et une gouttière aval (134.3).

6. Rotor (112) selon la revendication 5, **caractérisé en ce que** les orifices (136) de la coquille (134) sont agencés dans la gouttière amont (134.2).

7. Rotor (112) selon l'une des revendications 2 à 4, **caractérisé en ce que** la coquille (134) comprend des pattes de fixation (134.2) et les orifices (136) de la coquille (134) sont agencés dans les pattes (134.2).

8. Rotor (212 ; 312) selon la revendication 1, **caractérisé en ce que** la coquille (234 ; 334) comprend une cavité annulaire (240 ; 340) ouverte radialement vers l'intérieur, et des bords (242 ; 342) renfermant partiellement la cavité (240 ; 340), les éléments vissés (238 ; 338) étant constitués de plaquettes de fixation (238.2 ; 338.2) agencées dans la cavité annulaire (240 ; 340) et en appui sur les bords (242; 342), et de vis (238.1 ; 338.1) retenant les plaquettes (238.2 ; 338.2) sur le tambour (212.1 ; 312.1).

9. Rotor (212 ; 312) selon la revendication 8, **caractérisé en ce que** les plaquettes (238.2 ; 338.2) sont munies chacune d'un trou taraudé recevant les vis (238.1 ; 338.1).

10. Rotor (112 ; 212 ; 312) selon l'une des revendications 1 à 9, **caractérisé en ce que** le tambour (112.1 ; 212.1 ; 312.1) comprend une portion cylindrique (112.2 ; 212.2 ; 312.2) ou conique sur laquelle est supportée la coquille (134 ; 234 ; 334).

11. Rotor (112 ; 212 ; 312) selon l'une des revendications 1 à 10, **caractérisé en ce qu'**au moins une des aubes (126 ; 226 ; 326) est soudée ou vissée à la coquille (134 ; 234 ; 334).

12. Rotor (112 ; 212 ; 312) selon l'une des revendications 1 à 11, **caractérisé en ce qu'**au moins une des aubes (126 ; 226 ; 326) est venue de matière avec la coquille (134 ; 234 ; 334).

13. Rotor (112 ; 212 ; 312) selon l'une des revendications 1 à 12, **caractérisé en ce que** la coquille (134 ; 234 ; 334) est en métal.

14. Rotor (112 ; 212 ; 312) selon l'une des revendications 1 à 12, **caractérisé en ce que** la coquille (134 ; 234 ; 334) est en matériau composite.

15. Rotor (112 ; 212 ; 312) selon l'une des revendications 1 à 14, **caractérisé en ce que** le tambour (112.1 ; 212.1 ; 312.1) comprend des douilles métalliques (139) prévues sous forme d'inserts de moulage et les éléments vissés (138 ; 238 ; 338) sont reçus dans ces douilles (139).

16. Procédé de montage d'un rotor (112; 212; 312) selon l'une des revendications précédentes, le procédé comprenant une étape de mise en position par déplacement axial de la coquille (134 ; 234 ; 334) sur le tambour (112.1 ; 212.1 ; 312.1) et une étape de mise en place des éléments vissés (138 ; 238 ; 338) pour solidariser la coquille (134 ; 234 ; 334) au tambour (112.1 ; 212.1 ; 312.1).

## Patentansprüche

1. Rotor (112; 212; 312) für einen Verdichter (4; 6) einer Turbomaschine (2), wie z.B. eines Flugzeug-Turbotriebwerks (2), umfassend:
- eine Trommel (112.1; 212.1; 312.1) aus einem Verbundwerkstoff; und
- eine Vielzahl von ringförmigen Rotorschaufelreihen (126; 226; 326);
die für jede Reihe von Schaufeln (126; 226; 326) ein ringförmiges Gehäuse (134; 234; 334) zum Festklemmen der Schaufeln (126; 226; 326) an der Trommel (112.1; 212.1; 312.1) umfasst, wobei das Gehäuse (134; 234; 334) mittels Schraubbefestigungen (138; 238; 338) an der Trommel (112.1; 212.1; 312.1) befestigt ist.

2. Rotor (112; 212; 312) nach Anspruch 1, **dadurch gekennzeichnet, dass** das Gehäuse (134; 234; 334) aus mehreren winkelförmigen Segmenten (134.4), beispielsweise zwei Halbringen, besteht.

3. Rotor (112) nach Anspruch 1 oder 2, **dadurch gekennzeichnet, dass** das Gehäuse (134) mit einer Vielzahl von Bohrungen (136) versehen ist, die winkelförmig um eine Achse (114) des Rotors (112) verteilt sind, die Trommel (112.1) ebenfalls mit Bohrungen (137) versehen ist, die axial und in Umfangsrichtung mit den Bohrungen (136) des Gehäuses (134) ausgerichtet sind, und die Schraubbefestigungen (138) Schrauben (138.1) sind, die die Bohrungen (136, 137) durchdringen.

4. Rotor (112) nach Anspruch 3, **dadurch gekennzeichnet, dass** die Schrauben (138.1) mittels Muttern (138.2) gesichert sind, die radial innerhalb der Trommel (112.1) angeordnet sind, und die Schrauben (138.1) mit ihren Enden radial außerhalb der entsprechenden Bohrungen (136) des Gehäuses (134) angeordnet sind.

5. Rotor (112) nach einem der Ansprüche 1 bis 4, **dadurch gekennzeichnet, dass** das Gehäuse (134) einen Mittelteil (134.1), in dem die Schaufeln (126) sitzen, eine stromaufwärtige Wanne (134.2) und eine stromabwärtige Wanne (134.3) aufweist.

6. Rotor (112) nach Anspruch 5, **dadurch gekennzeichnet, dass** die Bohrungen (136) des Gehäuses (134) in der stromaufwärtigen Wanne (134.2) angeordnet sind.

7. Rotor (112) nach einem der Ansprüche 2 bis 4, **dadurch gekennzeichnet, dass** das Gehäuse (134) mit Halteklammern (134.2) versehen ist und die Bohrungen (136) des Gehäuses (134) in den Klammern (134.2) angeordnet sind.

8. Rotor (212; 312) nach Anspruch 1, **dadurch gekennzeichnet, dass** das Gehäuse (234; 334) einen ringförmigen, radial nach innen geöffneten Hohlraum (240; 340) und den Hohlraum (240; 340) teilweise verschließende Ränder (242; 342) aufweist, Schraubbefestigungen (238; 338) bestehend aus Platten (238. 2; 338.2), die in dem ringförmigen Hohlraum (240; 340) angeordnet sind und auf den Rändern (242; 342) aufliegen, und Schrauben (238.1; 338.1), die die Platten (238.2; 338.2) an der Trommel (212.1; 312.1) befestigen.

9. Rotor (212; 312) nach Anspruch 8, **dadurch gekennzeichnet, dass** die Platten (238.2; 338.2) jeweils mit einem Gewindeloch versehen sind, in das die Schrauben (238.1; 338.1) eingeschraubt sind.

10. Rotor (112; 212; 312) nach einem der Ansprüche 1 bis 9, **dadurch gekennzeichnet, dass** die Trommel (112.1; 212.1; 312.1) einen zylindrischen (112.2; 212.2; 312.2) oder konischen Abschnitt aufweist, auf dem das Gehäuse (134; 234; 334) liegt.

11. Rotor (112; 212; 312) nach einem der Ansprüche 1 bis 10, **dadurch gekennzeichnet, dass** mindestens eine der Schaufeln (126; 226; 326) mit dem Gehäuse (134; 234; 334) verschweißt oder verschraubt ist.

12. Rotor (112; 212; 312) nach einem der Ansprüche 1 bis 11, **dadurch gekennzeichnet, dass** mindestens eine der Schaufeln (126; 226; 326) fest mit dem Gehäuse (134; 234; 334) verbunden ist.

13. Rotor (112; 212; 312) nach einem der Ansprüche 1 bis 12, **dadurch gekennzeichnet, dass** das Gehäuse (134; 234; 334) aus Metall hergestellt ist.

14. Rotor (112; 212; 312) nach einem der Ansprüche 1 bis 12, **dadurch gekennzeichnet, dass** das Gehäuse (134; 234; 334) aus einem Verbundwerkstoff hergestellt ist.

15. Rotor (112; 212; 312) nach einem der Ansprüche 1 bis 14, **dadurch gekennzeichnet, dass** die Trommel (112.1; 212.1; 312.1) metallische Nuten (139) aufweist, die als Gusseinsätze angeordnet sind, und die Schrauben (138; 238; 338) in den jeweiligen Nuten (139) eingeklemmt sind.

16. Verfahren zur Montage eines Rotors (112; 212; 312) nach einem der vorhergehenden Ansprüche, bestehend aus einer Phase des Positionierens des Gehäuses (134; 234; 334) auf der Trommel (112.1; 212.1; 312.1) durch axiale Verschiebung und einer Phase des Einsetzens der Schraubbefestigungen (138; 238; 338), um das Gehäuse (134; 234; 334) auf der Trommel (112.1; 212.1; 312.1) zu befestigen.

## Claims

1. Rotor (112; 212; 312) for a compressor (4; 6) of a turbomachine (2), such as an aircraft turbojet engine (2), comprising:
- a drum (112.1; 212.1; 312.1), made of composite material; and
- a plurality of annular rows of rotor blades (126; 226; 326);
**characterized in that** it comprises, for each row of blades (126; 226; 326), an annular shell (134; 234; 334) for fixing the blades (126; 226; 326) to the drum (112.1; 212.1; 312.1), the shell (134; 234; 334) being attached to the drum (112.1; 212.1; 312.1) by screwed elements (138; 238; 338).

2. Rotor (112; 212; 312) according to claim 1, **characterized in that** the shell (134; 234; 334) is formed of several angular segments (134.4), such as two half shells.

3. Rotor (112) according to claim 1 or 2, **characterized in that** the shell (134) comprises a plurality of orifices (136) angularly distributed around an axis (114) of the rotor (112), **in that** the drum (112.1) has holes (137) axially and circumferentially aligned with the orifices (136) of the shell (134), and **in that** the screw elements (138) are screws (138.1) which penetrate the holes (136, 137).

4. Rotor (112) according to claim 3, **characterized in that** respective nuts (138.2) hold the screws (138.1), the nuts (138.2) being arranged radially inside the drum (112.1) and the screws (138.1) having heads radially outside the respective holes (136) of the shell (134).

5. Rotor (112) according to any of claims 1 to 4, **characterized in that** the shell (134) includes a central portion (134.1) receiving the blades (126), an upstream trough (134.2) and a downstream trough (134.3).

6. Rotor (112) according to claim 5, **characterized in that** the orifices (136) of the shell (134) are arranged in the upstream trough (134.2).

7. Rotor (112) according to any of claims 2 to 4, **characterized in that** the shell (134) comprises brackets (134.2) and the orifices (136) of the shell (134) are arranged in the brackets (134.2).

8. Rotor (212; 312) according to claim 1, **characterized in that** the shell (234; 334) comprises an annular cavity (240; 340) open radially inwardly, and edges (242; 342) partially enclosing the cavity (240; 340), wherein the threaded members (238; 338) are constituted of fastener pads (238.2; 338.2) arranged in the annular cavity (240; 340) and leaning against the edges (242; 342), and screws (238.1; 338.1) holding the pads (238.2; 338.2) to the drum (212.1; 312.1).

9. Rotor (212; 312) according to claim 8, **characterized in that** the pads (238.2; 338.2) are each provided with a threaded hole receiving the screws (238.1; 338.1).

10. Rotor (112; 212; 312) according to any of claims 1 to 9, **characterized in that** the drum (112.1; 212.1; 312.1) comprises a cylindrical (112.2; 212.2; 312.2) or conical portion on which the shell (134; 234; 334) is supported.

11. Rotor (112; 212; 312) according to any of claims 1 to 10, **characterized in that** at least one of the blades (126; 226; 326) is welded or screwed to the shell (134; 234; 334).

12. Rotor (112; 212; 312) according to any of claims 1 to 11, **characterized in that** at least one of the blades (126; 226; 326) is integral with the shell (134; 234; 334).

13. Rotor (112; 212; 312) according to any of claims 1 to 12, **characterized in that** the shell (134; 234; 334) is made of metal.

14. Rotor (112; 212; 312) according to any of claims 1 to 12, **characterized in that** the shell (134; 234; 334) is made of composite material.

15. Rotor (112; 212; 312) according to any of claims 1 to 14, **characterized in that** the drum (112.1; 212.1; 312.1) comprises metal sleeves (139) provided as molding inserts and the screwed elements (138; 238; 338) are received in these sleeves (139).

16. Method of assembling a rotor (112; 212; 312) according to any of the preceding claims, the method comprising a step of positioning the shell (134; 234; 334) on the drum (112.1; 212.1; 312.1) by axial displacement and a step of placing the screw elements (138; 238; 338) to secure the shell (134; 234; 334) to the drum (112.1; 212.1; 312.1).
